# EUROPÄISCHE PATENTANMELDUNG

(11) **EP 2 886 896 A2**
(43) Veröffentlichungstag der Anmeldung: **24.06.2015**
(21) Anmeldenummer: 14197206.7
(22) Anmeldetag: 10.12.2014
(51) Int. Cl.: F16C 33/78

(54) **Wälzlager mit Dichtungseinheit für Wälzlager**

(30) Priorität: 19.12.2013 DE 102013226557
(71) Anmelder: Aktiebolaget SKF, 41 550 Göteborg (SE)
(72) Erfinder: Kern, Henning, 97422 Schweinfurt (DE); Back, Femke, 97422 Schweinfurt (DE); Bettenhausen, Jens, 97072 Würzburg (DE); Hain, Steffen, 97753 Karlstadt (DE); Hofmann, Matthias, 97422 Schweinfurt (DE); Lorenscheit, Jochen, 97222 Rimpar (DE); Pfeuffer, Christina, 97776 Eußenheim (DE); Pickel, Edgar, 97334 Sommerach (DE); Schleyer, Werner, 96182 Reckendorf (DE); Seuberling, Mathias, 97633 Großeibstadt (DE)
(74) Vertreter: Kuhstrebe, Jochen

(57) **Zusammenfassung**

Ein Wälzlager 12a; 12b weist eine Dichtungseinheit 10a; 10b für ein Wälzlager 12a; 10b auf. Die Dichtungseinheit 10a; 10b umfasst ein zumindest teilringförmiges Element 14a; 14b mit einer Dichtlippe 16a; 16b, wobei das zumindest teilringförmige Element 14a; 14b ein Befestigungsmittel 18a; 18b zur Befestigung an einem Lagerring 20a; 20b; 21a; 21b des Wälzlagers 12a; 12b aufweist.

## Beschreibung

Die nachfolgende Erfindung liegt auf dem Gebiet der Abdichtung von Wälzlagern.

Bekannte Dichtungskonzepte für Lager können zwar einen Schutz eines Wälzlagers vor Schmutz und Verunreinigung bieten, sind aber durch das individuell, auf das jeweilige Lager zugeschnittene Design nur auf geringe Fertigungsstückzahlen beschränkt und schwer auf andere Wälzlagergrößen oder gar Wälzlagertypen übertragbar. Außerdem ist ein einfacher Dichtungsaustausch im montierten Zustand nur erschwert möglich, da durch aufwändigen und kostenintensiven Demontageaufwand Umbauteile für den Dichtungstausch entfernt werden. Dies ist insbesondere für Großlager ab einem Durchmesser oder Radius von etwa 400 Millimetern der Fall.

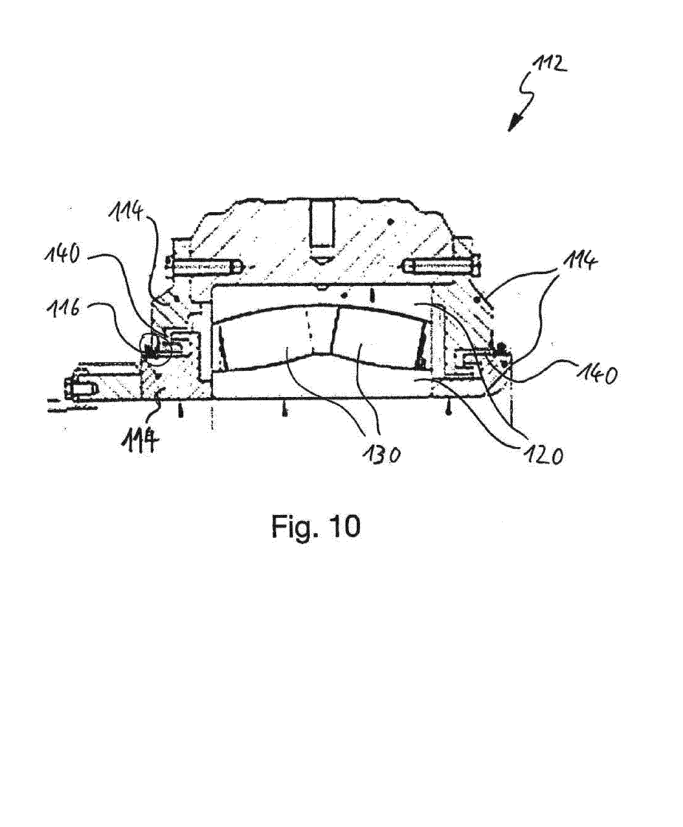

Fig. 10 zeigt eine konventionelle Dichtung eines Großlagers 112 anhand eines Vergleichsbeispiels. Das Großlager 112 wird auf zwei Seiten durch sogenannte Labyrinthe 140 abgedichtet, die durch Labyrinthringe 114 gebildet werden. Die Dichtung setzt sich demnach aus beiderseitig vorgesehenen Labyrinthringen 114 zusammen, die labyrinthförmig ausgebildete Dichtungsspalte, die sogenannten Labyrinthe 140, bilden. Durch die mäanderförmige Geometrie der so gebildeten Labyrinthe 140 kann das Eindringen von Fremdstoffen in den zu dichtenden Bereich, beispielsweise zu den Wälzkörpern 130 oder den Laufflächen der Lagerringe 120 erschwert werden. Alle Zwischenräume des Labyrinths 140 und auch des Wälzlagers 112 können bei dieser Dichtungsvariante gewöhnlich mit Fett oder Schmierstoff gefüllt werden. Außerdem kann ein unterstützender, sogenannter V-Ring 116 am oder im Labyrinth 140 eingesetzt werden. Durch periodisches Nachschmieren kann die Dichtwirkung zusätzlich unterstützt werden. Alle genannten Komponenten können Kostenfaktoren sein. Zudem ragen die das Labyrinth 140 bildenden Labyrinthringe 114 über die Breite des eigentlichen Wälzlagers 112, genauer gesagt über die Breite der Lagerringe 120 hinaus und können dadurch wertvollen Raum innerhalb einer Maschine beanspruchen. Die meist massiven Ausführungen der Labyrinthringe 114, beispielsweise aus Gusseisen wie Grauguss, können durch ihr Eigengewicht zu weiteren Nachteilen bei Montage und Betrieb führen.

Daneben können Lager, wie beispielsweise Großlager, gemäß einem weiteren Vergleichsbeispiel auch durch schleifende Dichtringe geschützt werden. Dabei kann es sich im Wesentlichen um Radialwellendichtringe, evtl. mit vorgeschalteter Staubschutzlippe, handeln, die mittels z.B. gegossenen Trägerteilen in Position gehalten werden. Diese Trägerteile können ebenso eine große Masse und damit ein hohes, bei der Montage zu bewegendes Gewicht bedingen. Eine Austauschbarkeit des Dichtringes kann entweder nicht möglich, oder aber mit einem erheblichen Demontage- und Montageaufwand verbunden sein.

Beiden zuletzt genannten Dichtungskonzepten ist die Segregation vom Wälzlager gemein, wodurch eine Befüllung mit Schmierstoff erst im montierten Zustand erfolgen kann. Insofern können die vorgesehenen Dichtungen erst nach Montage der Lager angebracht werden, und eine Schmierstoffbefüllung kann wiederum erst danach erfolgen.

Darüber hinaus sind integrierte Dichtungskonzepte, die rein aus Elastomer z.B. faltenbalgartig ausgeführt sind (siehe Offenlegungsschrift DE 10 2007 036 891 A1), bekannt. Eine werkseitige Vorbefettung kann hier erfolgen. Die notwendige Steifigkeit des Dichtsystems kann für große Lagerdurchmesser jedoch nicht oder nur unzureichend bewerkstelligt werden. Ein Austausch der Dichtung ohne Demontage des Wälzlagers ist auf Grund der geschlossenen Geometrie des Dichtringes zudem, wenn überhaupt, nur erschwert möglich.

Den genannten bestehenden Dichtungskonzepten ist gemein, dass sie nur eine begrenzte maximale Lagerschiefstellung erlauben. Gerade bei winkelbeweglichen Lagern wie Pendelrollenlager oder Kompakt-Anordnungs-Wälzlager (**C**ompact **A**ligning **R**oller **B**earing (CARB) Toroidal-Rollenlager) kann die maximal mögliche Verkippung eines Lagerinnenrings gegenüber einem Lageraußenring stark eingeschränkt sein. Bei Montage des Lagers oder auch im eigentlichen Betrieb kann dies zu einem Anstoßen des Wälzlagerrollensatzes an das Dichtungselement führen. Schäden am Rollensatz, dem Dichtungselement oder gar des Befestigungsmechanismus am jeweiligen Lagerring können die Folge sein, wodurch erhebliche Instandsetzungskosten verursacht werden können, und die Lebensdauer des Lagers beeinträchtigt werden kann.

Es besteht daher ein Bedarf daran, ein verbessertes Konzept zur Abdichtung von Wälzlagern zu schaffen.

Diesem Bedarf trägt eine Dichtungseinheit für ein Wälzlager gemäß Patentanspruch 1 und ein Wälzlager gemäß Patentanspruch 8 Rechnung.

Gemäß einem ersten Aspekt schaffen Ausführungsbeispiele eine Dichtungseinheit für ein Wälzlager, wobei die Dichtungseinheit ein zumindest teilringförmiges Element mit einer Dichtlippe umfasst. Das zumindest teilringförmige Element weist dabei ein Befestigungsmittel zur Befestigung an einem Lagerring des Wälzlagers auf. Die Dichtungseinheit kann dabei zumindest teilweise aus einem flexiblen, elastischen Material gefertigt sein. Hierzu kommen beispielsweise Elastomere, d.h. bestimmte Arten von Plastik bzw. gummiartige Werkstoffe in Frage. Der Begriff "Dichtungseinheit" verweist darauf, dass ein Durchdringen bestimmter Substanzen von einer Seite der Dichtungseinheit auf die andere verhindert werden soll. Zu diesen Substanzen können insbesondere Schmutzpartikel (z. B. Ruß, Feinstaub, Sand oder Schlamm), Gase oder Dämpfe (z. B. Sauerstoff, Dämpfe von Kraftstoffen oder Lösungsmitteln, oder auch Dämpfe giftiger oder korrosiver Substanzen) oder Flüssigkeiten (z. B. Wasser, Säure, Lauge, Öl), aber auch Stoffe wie z. B. Schmierfette zählen.

Das Wälzlager kann in verschiedenen Formen ausgeführt sein, so zum Beispiel als Kugellager, Tonnenlager oder Kegelrollenlager; zudem kann es eine einreihige oder mehrreihige Anordnung von Wälzkörpern aufweisen. Ein zumindest teilringförmiges Element kann beispielsweise durch einen vollständigen Ring gebildet werden, aber auch durch Teile eines Ringes, beispielsweise durch Segmente. Neben Ringsegmenten wären jedoch auch Ausführungen möglich, bei denen ein Ring beispielsweise aus Teilen mit unregelmäßiger Form zusammengesetzt werden kann. Eine Ausführung in mehreren Teilen eines Ringes kann die Wartung erheblich erleichtern, da beispielsweise der Ein- und Ausbau derart erfolgen kann, dass ein vollständiger Ausbau des gesamten Wälzlagers nicht mehr erforderlich ist. Mittels der Dichtlippe könnte ein dichtender Kontakt beispielsweise zu einem weiteren Bauteil des Wälzlagers, etwa einem Lagerring, hergestellt werden. Die Dichtungseinheit und die Dichtlippe können hierzu aus unterschiedlichen Materialien gefertigt sein. Die Dichtlippe oder die gesamte Dichtungseinheit können wenigstens teilweise aus einem Dichtungswerkstoff gefertigt sein. Ein Dichtungswerkstoff kann beispielsweise ein Kunststoff sein, z.B. Polyurethan, Nitrilkautschuk (**N**itrile **B**utadiene **R**ubber (NBR), Hydrierter Acrylnitrilbutadien-Kautschuk (**H**ydrated **N**itrile **B**utadiene **R**ubber (HNBR)); je nachdem, welche Art von Stoff am Ein- oder Ausdringen gehindert werden soll. Die Dichtungseinheit könnte zumindest teilweise aus Metall, Metalllegierungen, besonders reibungsarmen Kunststoffen wie z. B. Polytetrafluorethylen (PTFE) oder Kunststoffen mit hoher Steifigkeit gefertigt sein. Kunststoffe hoher Steifigkeit könnten sogenannte Duroplaste sein. Zusätzlich kann die Dichtlippe oder Dichtungseinheit zumindest teilweise aus gummiartigen Werkstoffen, bzw. aus Kunststoffen geringer Steifigkeit, gefertigt sein; dies können beispielsweise Elastomere oder einige Thermoplaste sein. Die Verwendung von Dichtungswerkstoffen bei der Fertigung könnte einen geringen Verschleiß an einer Gleitfläche sowie eine gute Abdichtung bewirken. Eventuelle Kollisionen mit Wälzkörpern könnten durch das Material erheblich gedämpft werden. Weiterhin könnten die verwendeten Materialien eine Massenproduktion durch Verfahren wie Spritzgießen, Vulkanisieren, etc. ermöglichen. Produktions- und Materialkosten sowie Gewicht könnten somit eingespart werden.

Die Befestigung kann form-, kraft- oder stoffschlüssig erfolgen. Mögliche Befestigungsmittel könnten beispielsweise eine Schraube, eine Klebefläche, eine Schweißfläche, eine Lötstelle, eine Niete, eine Bohrung, ein Gewinde oder ein Nut und Feder aufweisendes System umfassen. Der Lagerring des Wälzlagers kann ein Lagerinnenring oder ein Lageraußenring sein. Das Element kann in einigen Ausführungsbeispielen weiterhin blechartig ausgebildet sein. Ein blechartiges Element kann auch als dünnes Element verstanden werden; mit anderen Worten könnte eine der drei Raumabmessungen (Dicke) sehr klein gegenüber den anderen beiden Raumabmessungen (Länge, Breite) sein. In Ausführungsbeispielen könnte die Dicke jeweils bis zu 1%, 2 %, 5 %, 10 %, etc. der Länge oder Breite betragen. Durch eine blechartige Ausführung des Elementes könnte ein erhebliches Maß an Volumen (Bauraum), und damit auch am Gewicht gespart werden. Ferner könnte es auch möglich sein, das Element und die Dichtlippe aus einem Stück oder demselben Material herzustellen. Ist das Element beispielsweise segmentiert, kann eine Verbindung der einzelnen Segmente zum Beispiel durch Verbindungsplatten, Verschraubungen, geklebt oder geschweißt sein.

Die Dichtungseinheit kann in einigen Ausführungsbeispielen zudem in ein bereits bestehendes Wälzlager integriert werden. Durch den einfachen Aufbau könnte das Konzept auf jedes Wälzlager unabhängig von Design, Lagerserie oder Durchmesser angewandt werden. Die Dichtungseinheit könnte so flexibel eingesetzt werden. Im Vergleich zur konventionellen Lösung der Labyrinthdichtung, wie sie beispielsweise in Windenergieanlagen zum Einsatz kommt, könnte der von einem Schmierstoff auszufüllende Raum erheblich reduziert werden. Hierdurch könnte weniger Bedarf an Schmierstoff auftreten. Die Dichtungseinheit kann in einigen Ausführungsbeispielen zudem aus leichtem Material ausgeführt sein. Dies könnte zu einer Materialkostenreduktion, einer Gewichtsreduzierung und damit zu einer erleichterten, zeiteffizienten Montage führen. Eine werkseitige Vorbefettung könnte eine Verunreinigung während der Montage des sonst ungedichteten, offenen Lagers erschweren, oder sogar verhindern.

Zusätzlich kann das Element in Ausführungsbeispielen ein zumindest teilscheibenförmiges Element sein. Zumindest teilscheibenförmig bedeutet, dass das Element ein Segment einer vollständigen Kreisscheibe oder ein beliebig geformtes Teil einer vollständigen Kreisscheibe bilden kann und eine Mehrzahl solcher Elemente zu einer vollständigen Kreisscheibe zusammengesetzt werden kann. Auch könnte das Element bereits eine vollständige Kreisscheibe bilden. Das Element könnte dann beispielsweise zum Abdichten einer Hohlwelle verwendet werden, welche nach Montage auf einem Lager bündig mit diesem abschließt.

Ergänzend oder alternativ weist das Element einen Durchmesser oder einen Radius von mindestens 400 mm auf. Der Durchmesser oder Radius von mindestens 400 mm kann sich hierbei auf einen Kreis beziehen, der (teilweise) entlang des Umfangs eines ring- oder scheibenförmigen (bzw. teilring- oder teilscheibenförmigen) Elementes verläuft. Bezogen auf ein Lager kann der Durchmesser oder der Radius radial zu einer Rotationsachse des Lagers gemessen werden. Lager mit einem Außendurchmesser oder -radius von 400 mm oder mehr werden häufig auch als "Großlager" bezeichnet. Großlager können beispielsweise im Bereich der Energiegewinnung (z.B. Windkraftwerke, Unterwasserkraftwerke, Turbinen allgemein) zum Einsatz kommen. Eine Wartung, Montage oder ein Austausch einer konventionellen Dichtung kann bei einem Großlager mit erheblichem Aufwand verbunden sein. Die Ausführung des Elementes in mehreren Scheiben- oder Ringteilen könnte diesen Aufwand erheblich reduzieren.

Ergänzend oder alternativ überragt eine Dichtfläche der Dichtlippe das Element in axialer Richtung. Die Dichtlippe kann in einem Ausführungsbeispiel auf eine abgeschrägte Fläche des Lagerringes aus einer solchen Richtung angreifen, die eine axiale Vektorkomponente ungleich Null aufweist. Die Spitze des Dichtlippenprofils bzw. die Dichtfläche, kann also in einer Ruheposition des Lagers axial am Lagerring anliegen. Das Innere des Lagers könnte somit vor einer Eintragung von Feuchtigkeit, Schmutz oder Fremdpartikeln geschützt werden.

Ergänzend oder alternativ weist das Element eine Nut zur Befestigung eines Versteifungselements auf. Beispielsweise kann die Dichtungseinheit aus einem Elastomer gefertigt sein. Der Wärmeausdehnungskoeffizient des eingesetzten Dichtungswerkstoffes (also z.B. Elastomer) kann den von Wälzlagerstahl deutlich übersteigen. Um eine Zentrierung der Dichtlippe gegenüber der Gegenlauffläche auch bei Erwärmung zu erreichen, kann im Element eine Vertiefung oder Nut vorhanden sein, in welche ein Versteifungselement, beispielsweise ein Stahlband oder Stahlseil eingelegt werden kann. Dadurch könnte eine etwaige stärkere Ausdehnung des Dichtwerkstoffes verglichen zu dem Wälzlager kompensiert werden.

Das eingelegte Versteifungselement könnte außerdem eine um den gesamten Umfang des Innenrings verbesserte, gleichmäßigere oder optimale Verteilung des Anpressdruckes der Dichtlippe auf die Gegenlauffläche gewährleisten. Damit könnte eine Selbstzentrierung realisiert werden und keine weiteren Zentriermaßnahmen erforderlich sein. Die Gefahr einer Leckage könnte somit effektiv reduziert werden.

Optional liegt bei einem solchen Ausführungsbeispiel die Nut näher an der Dichtlippe als an dem Befestigungsmittel. Auch umfasst die Nut optional bei einem solchen Ausführungsbeispiel ein Versteifungselement. Je näher die Nut an der Dichtlippe liegt, desto besser könnte die Gegenlauffläche durch den Anpressdruck der Dichtlippe angesteuert werden. In anderen Ausführungsbeispielen könnte die Nut jedoch auch weiter entfernt von der Dichtlippe als von dem Befestigungselement sein. Das Versteifungselement könnte kraft-, form- oder stoffschlüssig mit dem Element verbunden sein. Das Vorhandensein eines Versteifungselements könnte sich beispielsweise in Anwendungsumgebungen als lohnenswert erweisen, in denen das Lager hohen Temperaturschwankungen unterworfen ist.

Die Dichtungseinheit ist hierbei ergänzend oder alternativ einstückig ausgebildet. Unter einer einstückig ausgebildeten Komponente wird eine solche verstanden, die genau aus einem zusammenhängenden Materialstück gefertigt ist. Unter einer einteilig gefertigten, bereitgestellten oder hergestellten Komponente oder Struktur oder einer integral mit wenigstens einer weiteren Komponente oder Struktur gefertigten, bereitgestellten oder hergestellten Komponente oder Struktur wird eine solche verstanden, die ohne eine Zerstörung oder Beschädigung einer der wenigstens zwei beteiligten Komponenten nicht von der wenigstens einen weiteren Komponente getrennt werden kann. Ein einstückiges Bauteil stellt so auch wenigstens ein integral mit einer anderen Struktur des betreffenden Bauteils gefertigtes oder einteiliges Bauteil dar.

Ergänzend oder alternativ liegt das Befestigungsmittel relativ zu der Dichtlippe radial innen oder außen. Mit anderen Worten, die Dichtungseinheit kann in manchen Ausführungsbeispielen an einem Lagerinnenring oder auch an einem Lageraußenring angebracht sein. Ist die Dichtungseinheit an dem Lageraußenring angebracht, könnte dadurch die abzudichtende Fläche verringert werden und ein Teil des Dichtungswerkstoffes, aus dem die Dichtlippe gefertigt ist, eingespart werden. Ist die Dichtungseinheit andererseits an dem Lagerinnenring befestigt, könnte beispielsweise bei bestimmten Pendelrollenlagern eine Kollision der Wälzkörper oder eines Lagerkäfigs mit der Dichtungseinheit bei einem Verkippen des Lagers vermieden werden.

Ergänzend oder alternativ ist die Dichtungseinheit mit dem Lagerring austauschbar verbindbar. Austauchbar verbindbar bedeutet hierbei, dass die Dichtungseinheit mit dem Lagerring mehrfach verbindbar, auswechselbar oder reversibel verbindbar sein kann. Die Verbindung kann also lösbar und wiederherstellbar sein, sodass dabei keine Schäden an dem Lagerring oder der Dichtungseinheit entstehen. Es könnte also möglich sein, einen Austausch, Einbau oder eine Entfernung beispielsweise nur des teilringförmigen Elements vorzunehmen. Ebenso könnte das Einsetzen, Entfernen oder Austauschen aufwandsarm und beschädigungsfrei erfolgen.

Ausführungsbeispiele beziehen sich weiterhin ergänzend oder alternativ auf ein Lager mit mindestens einem Lagerring und mit einer Dichtungseinheit, die wenigstens ein zumindest teilringförmiges Element umfasst. Das Element schließt hierbei mit dem Lagerring in axialer Richtung bündig ab. Mit anderen Worten gesagt, könnte das Element wenigstens teilweise und derart von einer Vertiefung des Lagerrings umschließbar sein, dass eine außenliegende (d.h. einem Wälzkörper des Wälzlagers abgewandten) Fläche des Elementes mit einer außenliegenden Fläche des Lagerrings nach dem Verbinden bündig abschließt. Es könnte also in Ausführungsbeispielen vermieden werden, dass das Element den Lagerring in axialer Richtung überragt. Hierdurch könnte der erforderliche Bauraum für das Lager reduziert, ggf. sogar auf ein Minimum reduziert, werden. Dadurch könnte es beispielsweise möglich sein, einen von der internationalen Organisation für Normung (ISO, von griech.: isos = gleich) vorgegebenen Bauraum einzuhalten.

Optional ist bei einem solchen Ausführungsbeispiel, bei dem das Element eine Nut zur Befestigung eines Versteifungselementes aufweist, ein Versteifungselement in die Nut eingebracht. Ferner kann das Versteifungselement in einigen Ausführungsbeispielen einen Wärmeausdehnungskoeffizienten aufweisen, der im Wesentlichen den Wärmeausdehnungskoeffizienten eines Lagerrings entspricht. Je genauer die Wärmeausdehnungskoeffizienten des Versteifungselementes und des Lagerrings übereinstimmen, desto effizienter könnte die Zentrierung der Dichtlippe bei Temperaturschwankungen erhalten bleiben. Die Angabe "im Wesentlichen" bedeutet, dass die Wärmeausdehnungskoeffizienten des Versteifungselementes und des Lagerrings in einem Ausführungsbeispiel um bis zu 1 %, 2 %, 5 % oder 10 % voneinander abweichen könnten.

Optional umfasst das Lager in einem solchen Ausführungsbeispiel zwei in einem begrenzten Winkel gegeneinander verkippbare Lageringe. Dies kann zum Beispiel in einem Pendelrollenlager der Fall sein.

Die maximal mögliche Verkippung zweier Lagerringe gegeneinander kann in einigen Ausführungsbeispielen einen Bruchteil eines Grades, aber auch mehrere Grad, zum Beispiel 2 oder 3 Grad betragen. Wie bereits erwähnt, kann die Dichtungseinheit z.B. an dem inneren Lagerring befestigt sein, so dass eine Kollision mit den Wälzkörpern bei einer Verkippung der beiden Lagerringe gegeneinander vermieden werden könnte. Die Verwendung einer Dichtlippe, die zum Beispiel aus Elastomer gefertigt sein kann, könnte den Lagerring bei Verkippung so viel Spielraum ermöglichen, dass die dichtende Funktion der Dichtlippe auch bei Verkippungen beispielsweise um ein oder zwei Grad erhalten bliebe. Ist die Dichtungseinheit an dem äußeren Lagerring befestigt, könnte beispielsweise eine Fertigung der Dichtungseinheit aus Kunststoff bei starker Verkippung beider Lagerringe zueinander Schäden deutlich verringern, die durch eine Kollision der Dichtungseinheit mit den Wälzkörpern entstehen könnten.

Ferner weist die Dichtungseinheit ergänzend oder alternativ in Ausführungsbeispielen mindestens eine flüssigkeitsdurchlässige Bohrung auf. Sind in die Dichtungseinheit solche sogenannte Fettauslassbohrungen eingearbeitet, könnte z.B. mittels Schläuchen oder direkt an den Bohrungen befestigten Sammelbehältern verbrauchter Schmierstoff effizient und gelenkt abgeführt werden. Somit könnte eine Verschmutzung umgebender Bauteile und des umgebenden Raumes vermieden werden.

Nachfolgend werden unter Bezugnahme auf die beigefügten Figuren Ausführungsbeispiele näher beschrieben und erläutert. Es zeigen:
Fig. 1 eine Dichtungseinheit für ein Wälzlager gemäß einem ersten Ausführungsbeispiel;
Fig. 2 ein Wälzlager mit Dichtungseinheit in Aufsicht gemäß einem ersten Ausführungsbeispiel;
Fig. 3 einen Querschnitt durch ein Wälzlager mit Dichtungseinheit in Seitenansicht gemäß einem ersten Ausführungsbeispiel;
Fig. 4 einen Querschnitt durch ein Wälzlager mit Dichtungseinheit in perspektivischer Ansicht gemäß einem ersten Ausführungsbeispiel;
Fig. 5 eine Dichtungseinheit für ein Wälzlager gemäß einem zweiten Ausführungsbeispiel;
Fig. 6 ein Befestigungsmittel für eine Dichtungseinheit für ein Wälzlager gemäß einem Ausführungsbeispiel;
Fig. 7 ein Wälzlager mit Dichtungseinheit in Aufsicht gemäß einem zweiten Ausführungsbeispiel;
Fig. 8 einen Querschnitt durch ein Wälzlager mit Dichtungseinheit in Seitenansicht gemäß einem zweiten Ausführungsbeispiel;
Fig. 9 einen Querschnitt durch ein Wälzlager mit Dichtungseinheit in perspektivischer Ansicht gemäß einem zweiten Ausführungsbeispiel; und
Fig. 10 einen konventionellen Aufbau einer Labyrinthdichtung gemäß einem Vergleichsbeispiel.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Im Folgenden verweisen einem Bezugszeichen angehängte Kleinbuchstaben "a" und "b" jeweils auf verschiedene Ausführungsbeispiele. So können etwa die Bezugszeichen "10a" und "10b" zwei Entsprechungen derselben Komponente in jeweils unterschiedlichen Ausführungsformen bezeichnen.

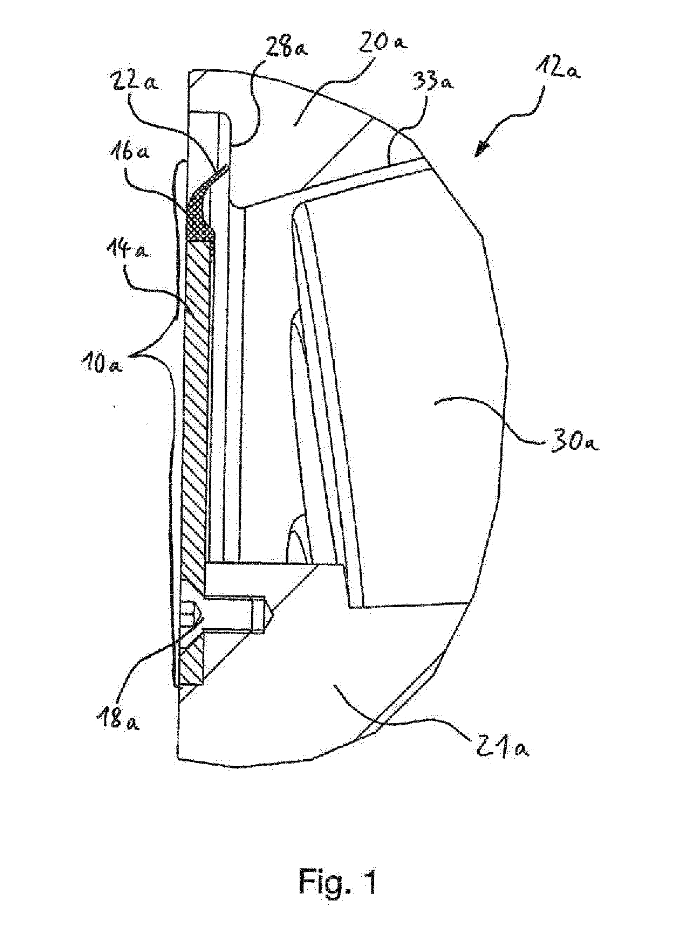

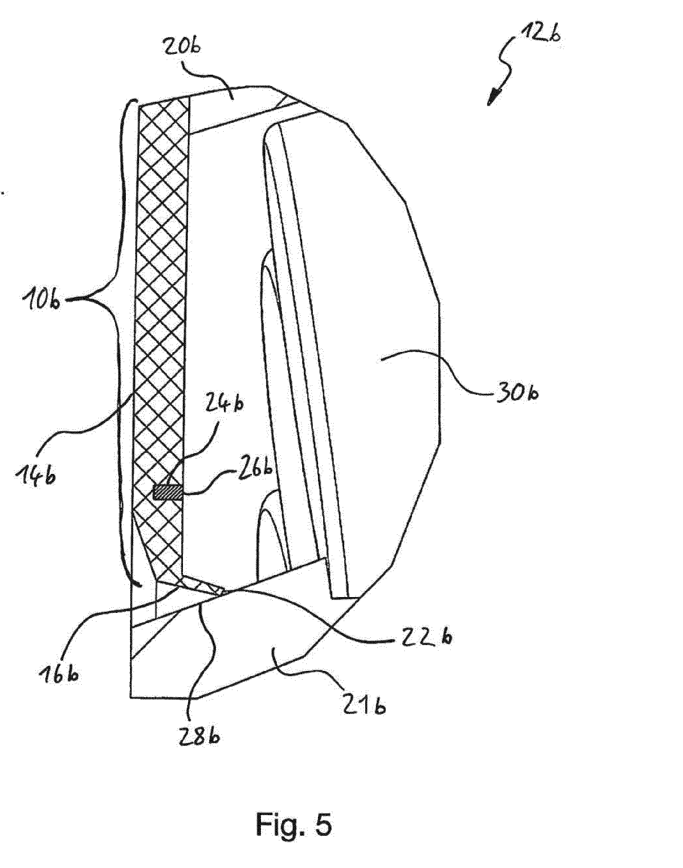

Nachfolgend wird ein erstes Ausführungsbeispiel anhand der Fign. 1-4 beschrieben und ein zweites Ausführungsbeispiel anhand der Fign. 5-9.

Fig. 1 zeigt eine Dichtungseinheit 10a für ein Wälzlager 12a gemäß einem ersten Ausführungsbeispiel. Ausführungsbeispiele beziehen sich auf eine Dichtungseinheit 10a; 10b für ein Wälzlager 12a; 12b, wobei die Dichtungseinheit 10a; 10b ein zumindest teilringförmiges Element 14a; 14b mit einer Dichtlippe 16a; 16b umfasst, und wobei das zumindest teilringförmige Element 14a; 14b ein Befestigungsmittel 18a; 18b zur Befestigung an einem Lagerring 20a; 20b; 21a; 21b des Wälzlagers 12a; 12b aufweist.

Das Befestigungsmittel 18a ist im Ausführungsbeispiel der Fig. 1 als Schraube dargestellt, könnte jedoch auch alternativ beispielsweise ein Bolzen, eine Klebefläche, eine Schweißfläche oder eine Lötfläche sein. In Fig. 1 ist außerdem ein äußerer Lagerring 20a und ein innerer Lagerring 21a gezeigt. Die Dichtungseinheit 10a umfasst ein zumindest teilringförmiges Element 14a mit einer Dichtlippe 16a. Weiterhin sind in der in Fig. 1 gezeigten Querschnittsdarstellung mehrere Wälzkörper 30a erkennbar, die im Ausführungsbeispiel eine Tonnenform aufweisen. Daneben sind jedoch auch andere Ausführungsformen der Wälzkörper 30a, beispielsweise als Kugel, Kegelrolle oder Zylinder möglich. Die Wälzkörper 30a können in verschiedenen Ausführungsbeispielen in einer oder in mehreren Reihen im Wälzlager 12a angeordnet sein. Die Lauffläche 33a des äußeren Lagerrings 20a weist in Fig. 1 eine Form auf, die einen Teil einer Kugelschale bildet. Der Krümmungsradius der Kugelschale entspricht dabei im Rahmen von Fertigungstoleranzen dem Krümmungsradius der tonnenförmigen Wälzkörper 30a. Somit ist eine Verkippung der beiden Lagerringe 20a; 21a gegeneinander möglich.

Ferner kann in Ausführungsbeispielen eine Dichtfläche 22a; 22b der Dichtlippe 16a; 16b, das Element 14a; 14b in axialer Richtung überragen. Die Dichtlippe 16a weist eine Dichtfläche 22a auf, die sich in axialer Richtung auf die den Wälzkörpern 30a zugewandten Seite erstreckt. Außerdem weist der äußere Lagerring 20a eine eingezogene Fläche 28a auf, die als Dichtfläche 28a des Lagerrings 20a fungiert und mit der Dichtfläche 22a der Dichtlippe 16a in Anlage steht. Wie in Fig. 1 beispielhaft dargestellt, kann die Dichtungseinheit 10a durch ein Element 14a und eine Dichtlippe 16a realisiert sein. Die Dichtfläche 22a, der Dichtlippe 16a liegt in der nicht ausgelenkten Position im Bereich der Dichtfläche 28a des äußeren Lagerrings 20a, axial an dem äußeren Lagerring 20a an und schützt dadurch das Innere des Wälzlagers 12a vor Eintragung von Feuchtigkeit, Schmutz, Fremdpartikeln, etc. Die Befestigung des Elements 14a ist in Fig. 1 durch Verschraubungen 18a realisiert, könnte aber z.B. auch durch Klemmen oder Kleben erfolgen. Die Dichtlippe 16a könnte an das Element 14a beispielsweise anvulkanisiert, geklebt, geklemmt, verschraubt, oder durch Formschluss fixiert sein.

Wie bereits erwähnt, könnte auch eine einteilige Ausführung der Dichtungseinheit 10a möglich sein, bei dem das Element 14a und die Dichtlippe 16a aus einem Werkstoff gefertigt sind. Wird das in Fig. 1 gezeigte Ausführungsbeispiel bei winkelverstellbaren Wälzlagern 12a, wie zum Beispiel Pendelrollenlager und CARB Toroidalwälzlager angewendet, könnte eine Kollision der Wälzkörper 30a mit der Dichtungseinheit 10a vermieden werden. Die Wälzkörper 30a könnten durch die Bordgeometrie des Lagerinnenrings 21a (z.B. eine Laufrille) geführt werden. Dadurch könnte die Dichtungseinheit 10a der Schiefstellung des Lagerinnenrings 21a gleichermaßen wie die Wälzkörper 30a folgen. Der minimal mögliche Abstand von Wälzkörpern 30a und Dichtungseinheit 10a könnte folglich konstant bleiben und damit ein Zusammenstoß vermieden werden. Wird der Außendurchmesser des Elementes 14a derart gewählt, dass die Lauffläche des äußeren Lagerrings 20a das Element 14a bei starker Verkippung nicht berührt, jedoch noch in Kontakt mit der Dichtlippe 16a steht, könnte zudem eine "überhöhte" Lagerschiefstellung, bei der die Dichtungseinheit 10a in den Lagerinnenbereich "eindringt", problemlos möglich sein. Die Dichtlippe 16a könnte hierbei eine ausreichend große Flexibilität durch geeignete Dichtlippengeometrie und Werkstoffwahl ermöglichen.

In Ausführungsbeispielen kann die Dichtungseinheit 10a; 10b mit dem Lagerring 20a; 20b; 21a; 21b austauschbar verbindbar sein. Durch geeignete Befestigungswahl des Elements 14a; 14b an dem Lagerring 20a; 20b; 21a; 21b und/oder der Dichtlippe 16a; 16b an dem Element 14a; 14b kann die Dichtlippe 16a; 16b, das Element 14a; 14b oder die gesamte Dichtungseinheit 10a; 10b einfach demontiert und ersetzt werden. Kostenintensive Wartungsarbeiten an den Wälzlagereinheiten könnten sich hierdurch reduzieren. Außerdem könnte durch die genannte, einfache Demontage der Dichtungseinheit 10a; 10b eine Sichtund Tastprüfung der markanten Bereiche des Wälzlagers 12a; 12b, wie Laufbahnen, Wälzkörper 30a; 30b oder Käfig erfolgen. Ebenso könnten gezielte Fettproben zur Schmierstoffanalyse entnommen werden, da nun alle Bereiche des Wälzlagers 12a; 12b offen und damit frei zugänglich gemacht werden können. Durch den im Vergleich zur konventionellen Lösung stark vereinfachten Aufbau könnten für Prototypen und kleinere Stückzahlen wirtschaftlichere Investitionen erforderlich sein. Für eine angestrebte Serienfertigung könnten die bekannten Fertigungsverfahren, wie Spritzgießen, Vulkanisieren o.ä. angewendet werden.

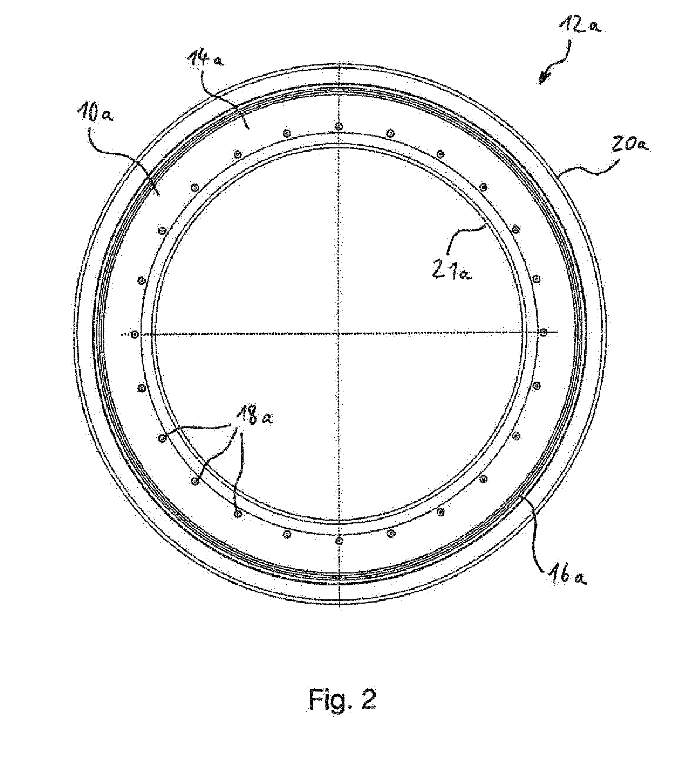

In Ausführungsbeispielen kann das Element 14a; 14b ein zumindest teilscheibenförmiges Element 14a; 14b sein. Fig. 2 zeigt ein Wälzlager 12a mit Dichtungseinheit 10a in Aufsicht gemäß dem ersten Ausführungsbeispiel. Das Element 14a ist hier als ringförmiges Element dargestellt. Alternativ kann das Element 14a jedoch auch in mehreren Teilen eines Ringes ausgeführt sein oder in Form einer Scheibe, die sich in radialer Richtung bis zum Mittelpunkt des Lagers erstreckt oder auch in Teilen einer Scheibe. Der Mittelpunkt des Lagers liegt in Fig. 2 an dem Kreuzungspunkt der zwei gestrichelten Linien. Das Element 14a; 14b kann ferner einen Durchmesser oder Radius von mindestens 400 mm aufweisen. Der Außendurchmesser des Elements 14a kann beispielsweise einem Durchmesser von mindestens 400 mm aufweisen, aber auch Werte darunter. Ferner ist in Fig. 2 zu erkennen, dass die hier als Schrauben dargestellten Befestigungsmittel 18a relativ zu der Dichtlippe 16a radial innen liegen. In Ausführungsbeispielen kann das Befestigungsmittel 18a; 18b relativ zu der Dichtlippe 16a; 16b radial innen oder außen liegen.

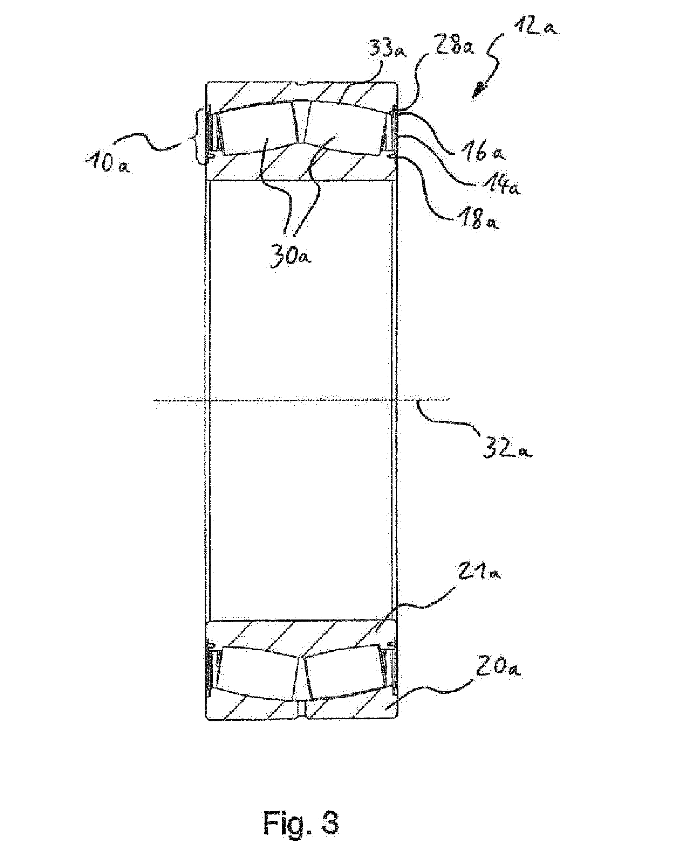

Fig. 3 zeigt einen Querschnitt durch das Wälzlager 12a mit Dichtungseinheit 10a in Seitenansicht gemäß dem ersten Ausführungsbeispiel aus Fig. 1 und 2. Eine gestrichelte Linie markiert die Rotationsachse bzw. die Mittelachse 32 des Wälzlagers 12 in Ruheposition. Man sieht in Fig. 3 sehr deutlich, dass die Lauffläche 33a des äußeren Lagerrings 20a die Form eines Teils einer Kugelschale aufweist. In manchen Ausführungsbeispielen kann das Lager 2 in einem begrenzten Winkel gegeneinander verkippbare Lagerringe 20a; 20b; 21a; 21b umfassen. Wird nun der Lagerinnenring 21a gegenüber dem Lageraußenring 20a verkippt, so kann bei einigen Ausführungsbeispielen die Dichtlippe 16a auf einer Seite des Wälzlagers 12a bei genügend hohem Anpressdruck immer noch in Kontakt mit der Dichtfläche 28a des äußeren Lagerrings 20a bleiben. Auf der gegenüberliegenden Seite kann sich dabei der äußere Lagerring 20a soweit über das Element 14a schieben, dass die Dichtlippe 16a dann mit ihrer Dichtfläche 22a in Kontakt zu der Lauffläche 33a des Lagerrings käme, und fortan an der Lauffläche 33a anstatt an der Dichtfläche 28a einen dichtenden Kontakt herstellen könnte.

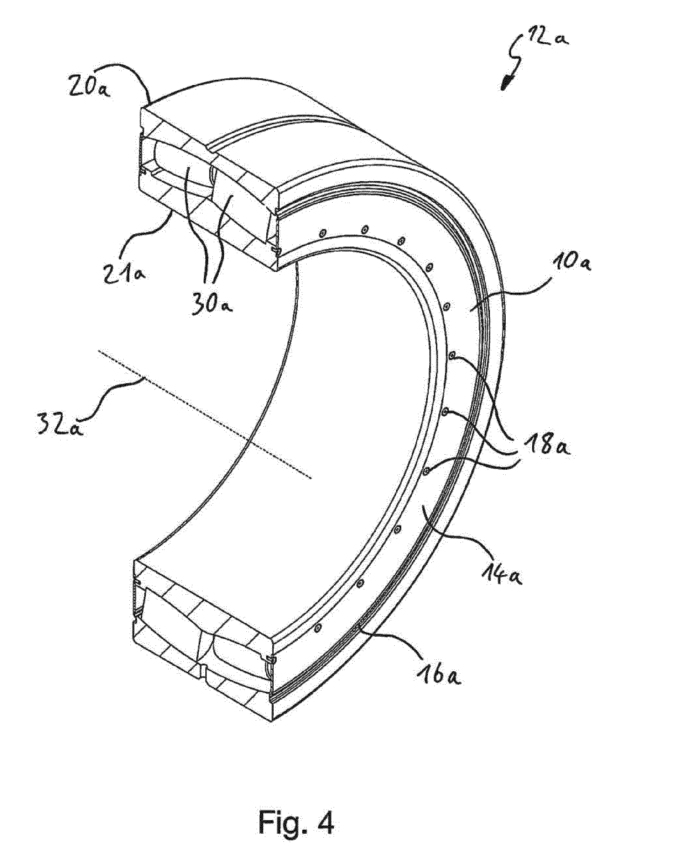

Zur umfassenderen Übersicht zeigt Fig. 4 nochmals einen Querschnitt durch das Wälzlager 12a mit Dichtungseinheit 10a in perspektivischer Ansicht gemäß dem ersten Ausführungbeispiel der Fign. 1-3.

Fig. 5 zeigt eine Dichtungseinheit für ein Wälzlager 12b gemäß einem zweiten Ausführungsbeispiel. Das Element 14a; 14b kann in manchen Ausführungsbeispielen eine Nut 24b zur Befestigung eines Versteifungselementes 26b aufweisen und/oder die Dichtungseinheit 10a; 10b kann einstückig ausgebildet sein. In Fig. 5 ist die Dichtungseinheit 10b einstückig ausgebildet. Mit anderen Worten gesagt, sind das Element 14b und die Dichtlippe 16b aus demselben Werkstoff und in einem Teil gefertigt. Die Dichtungseinheit 10b weist außerdem eine Nut 24b auf. Diese liegt auf der Innenseite des Lagers 12b, ist also den Wälzkörpern 30b zugewandt. In anderen Ausführungsbeispielen könnte die Nut 24b jedoch auch auf der anderen Seite der Dichtungseinheit 10b befindlich sein. Außerdem könnte die Nut 24b in weiteren Ausführungsbeispielen näher an der Dichtlippe 16b als an dem Befestigungsmittel 18b liegen und/oder die Nut 24b könnte ein Versteifungselement 26b umfassen. Fig. 5 zeigt ein Versteifungselement 26b, welches in die Nut 24b eingebracht ist.

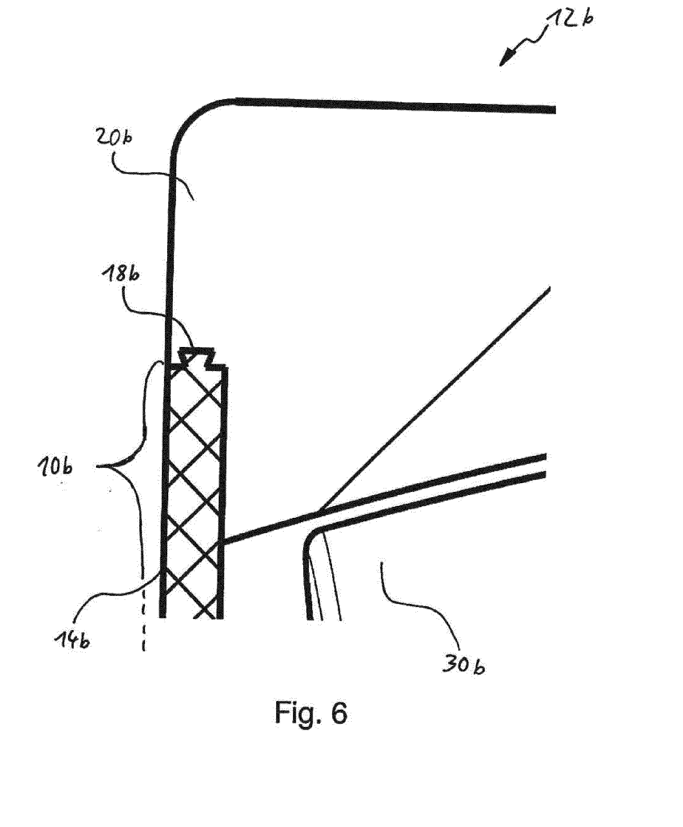

Fig. 6 zeigt eine Fortsetzung der Fig. 5 in radialer Richtung nach außen zu einem Ende der Dichtungseinheit 10b hin. Das Befestigungsmittel 18b ist in Fig. 6 im Detail gezeigt und stellt eine schwalbenschwanzartig ausgebildete, formschlüssige Verbindung dar. Betrachtet man Fig. 5 gemeinsam mit Fig. 6, so wird deutlich, dass die Nut 24b näher an der Dichtlippe 16b als an dem Befestigungsmittel 18b liegt. In anderen Ausführungsbeispielen kann sich die Nut 24b jedoch auch näher am Befestigungsmittel 18b als an der Dichtlippe 16b befinden.

In solchen Ausführungsbeispielen, wie sie in Fig. 5 und 6 beschrieben sind, kann das Versteifungselement 26b einen Wärmeausdehnungskoeffizienten aufweisen, der im Wesentlichen den Wärmeausdehnungskoeffizienten eines Lagerrings 20b; 21b entspricht. In Fig. 5 könnte so zum Beispiel der Wärmeausdehnungskoeffizient des Versteifungselements 26b dem Wärmeausdehnungskoeffizienten des äußeren Lagerings 20b entsprechen, wobei beispielsweise eine Abweichung von bis zu 1%, 2%, 5% oder 10% besteht.

In Ausführungsbeispielen kann das Element 14a; 14b mit zumindest einem Lagerring 20a; 20b; 21a; 21b des Lagers 12a; 12b in axialer Richtung bündig abschließen. Fig. 6 zeigt eine Möglichkeit zu einer Befestigung des Elements 14b. Das Element 14b ist hier mittels eines Befestigungsmittels 18b derart an dem äußeren Lagerring 20b befestigt, dass in axialer Richtung ein bündiger Abschluss zwischen Element 14b und äußerem Lagerring 20b entsteht. In einem anderen, beispielsweise in Fig. 1 gezeigten Ausführungsbeispiel ist ein Element 14a mit einem Lagerinnenring 21b derart verbunden, dass es mit diesem bündig abschließt. Das Element 14b in Fig. 6 ist mit einem schwalbenschwanzartig ausgebildeten Profil in eine entsprechend geformte Vertiefung des Lageraußenrings 20b eingerastet. Hierdurch könnte eine einfache Montage und Demontage ermöglicht werden. Alternativ könnte das Element 14b auch stoff-, kraft- oder anderweitig formschlüssig fixiert werden. Die Dichtlippe 16b könnte stoff-, kraft- oder formschlüssig an dem Element 14b fixiert sein. Es ist dies eine Alternative zu einer einstückigen Ausfertigung, bei der das Element 14b und die Dichtlippe 16b aus einem Werkstoff gefertigt sind.

Die bereits zuvor beschriebene Zentrierung durch das Versteifungselement 26b könnte günstige Fertigungsmöglichkeiten erlauben und für eine verbesserte oder sogar stets optimale Druckverteilung über den Umfang des Wälzlagerinnenrings 21b und der Dichtlippe 16b sorgen. Die in Fig. 6 dargestellte Befestigung der Dichtungseinheit 10b könnte eine einfache Montage und Demontage ermöglichen. Die Dichtungseinheit 10b könnte dazu z.B. geschnitten ausgeführt werden und die Schnittflächen im Rahmen der Wartungsarbeiten beispielsweise verklebt oder verschweißt werden. Somit könnte ein Tausch der Dichtlippe 16b auch im Felde einfach möglich sein. Hierdurch könnten kostenintensive Wartungsarbeiten an Wälzlagereinheiten reduziert werden.

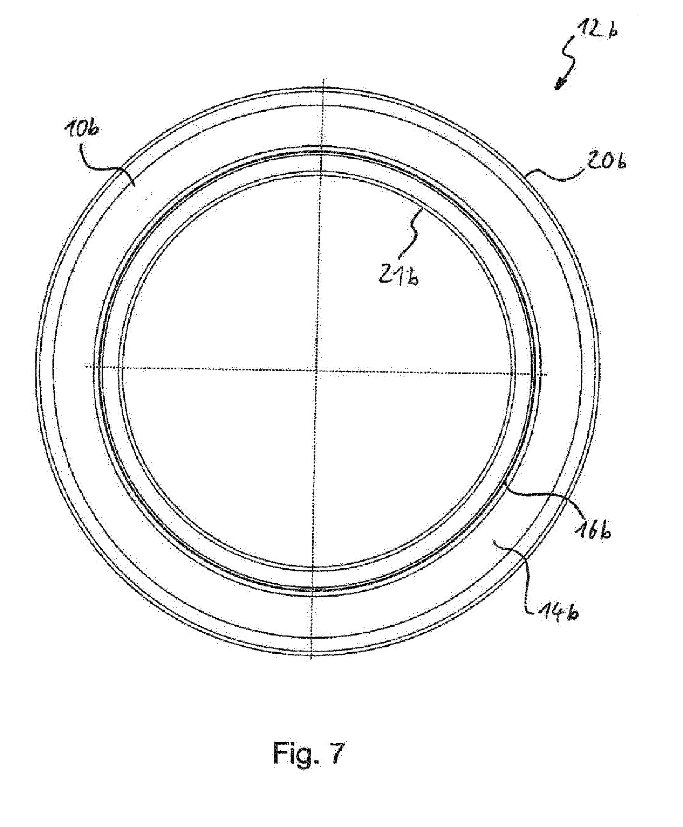

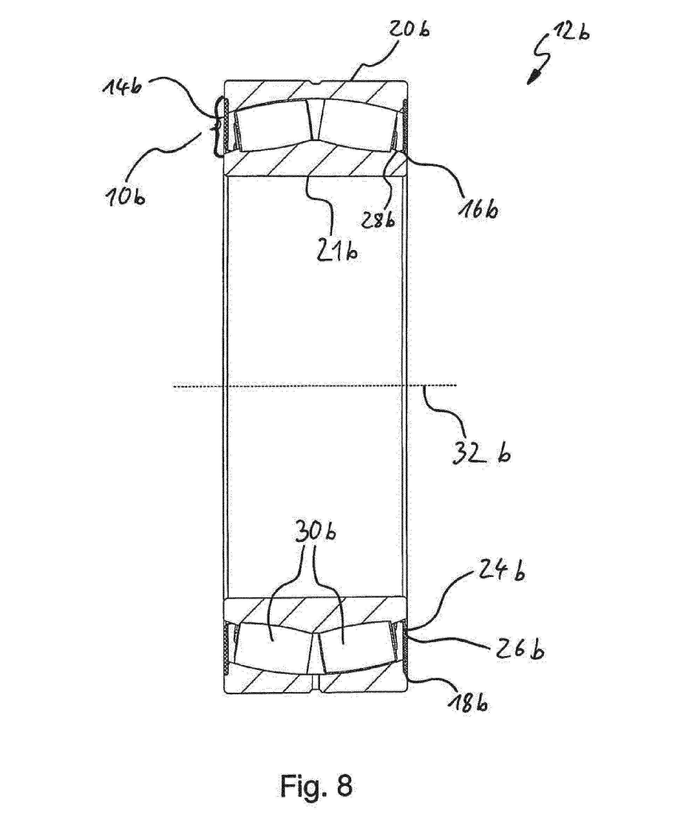

Fign. 7, 8 und 9 zeigen nochmals jeweils verschiedene Ansichten des Wälzlagers 12b mit der Dichtungseinheit 10b bzw. Querschnitte derselben. Fig. 7 zeigt ein Wälzlager 12b mit Dichtungseinheit 10b in Aufsicht. In Fig. 8, welche einen Querschnitt durch ein Wälzlager 12b mit Dichtungseinheit 10b in Seitenansicht zeigt, wird deutlich, dass bei einer Verschwenkung des Lagerinnenrings 21b gegenüber dem Lageraußenring 20b die Dichtlippe 16b weiterhin mit der Dichtfläche 28b des inneren Lagerrings 21b einen abdichtenden Kontakt bilden könnte.

In Fig. 8 wird zudem ersichtlich, dass die hier beschriebene Anordnung eine begrenzte Winkelschiefstellung des Lagerinnenrings 21b relativ zum Lageraußenring 20b erlaubt. Durch die genannte Materialwahl könnte jedoch eine Beschädigung der Wälzkörper 30b oder des Lagerkäfigs, des Befestigungsmittels 18b am Außenring 20b oder Markierungen auf den Wälzlagerlaufbahnen vermieden werden. Hierzu könnte die Dichtungseinheit 10b aus Elastomeren gefertigt sein, die eine geringe Materialsteifigkeit aufweisen. Die Dichtungseinheit 10b könnte daher bei Kollision mit den Wälzkörpern 30b bei überhöhter Innenringauslenkung den Stoß abfedern. In einigen Ausführungsbeispielen mit formschlüssiger Verbindung der Dichtungseinheit 10b mit dem Lageraußenring 20b könnte hierbei die Dichtungseinheit 10b aus der formschlüssigen Verbindung gestoßen werden. Dadurch könnte eine größere Beschädigung vermieden werden.

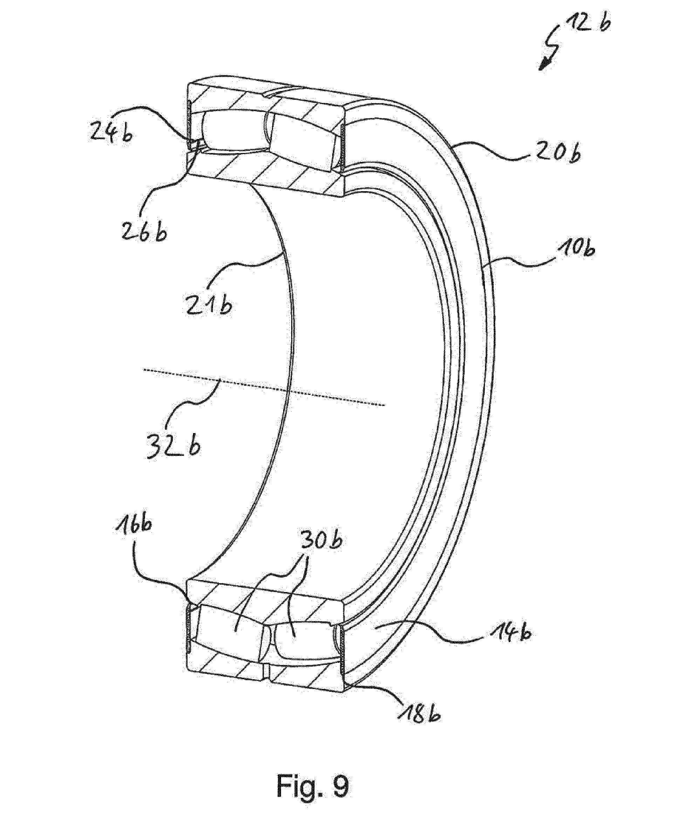

Fig. 9 zeigt schließlich einen Querschnitt durch ein Wälzlager 12b mit Dichtungseinheit 10b in perspektivischer Ansicht.

In Fign. 5 - 9 weist die Dichtungseinheit 10b ein teilscheiben- oder teilringförmiges Element 14b aufweisen, dass zum Beispiel aus Polyurethan, NBR, HNBR oder ähnlichen bekannten Dichtungswerkstoffen gefertigt sein könnte, und an dessen inneren Radius eine Dichtlippe 16b ausgeformt ist. Das Element 14b und die Dichtlippe 16b könnten also als ein Stück aus einem Material ausgebildet sein. Wie in Fign. 5 - 9 beispielhaft dargestellt, kann die Dichtungseinheit 10b in einigen Ausführungsbeispielen durch ein Element 14b und ein am Innendurchmesser des zumindest teilringförmigen Elements 14b ausgeformte Dichtlippe 16b realisiert sein. Das genannte Element 14b stellt einen Ring dar, der geteilt, geschnitten oder aus einem Stück gefertigt sein kann. Im Falle der geschnittenen Ausführung könnte die Verbindung der Schnittflächen zum Beispiel durch Kleben, Schweißen oder Ähnliches bewerkstelligt werden.

Die in Ausführungsbeispielen verwendeten Materialien könnten eine Massenproduktion zum Beispiel mittels Spritzgießen oder Vulkanisieren ermöglichen. Diese Verfahren sind bekannt und etabliert. Die zu erwartenden Fertigungskosten pro Stück könnten sich ggf. auf ein sehr geringes Niveau reduzieren.

### Bezugszeichenliste

- 10a; 10b: Dichtungseinheit
- 12a; 12b: Wälzlager
- 14a; 14b: Element
- 16a; 16b: Dichtlippen
- 18a; 18b: Befestigungsmittel
- 20a; 20b: Lageraußenring
- 21a; 21b: Lagerinnenring
- 22a; 21b: Dichtfläche der Dichtlippe
- 24b: Nut
- 26b: Versteifungselement
- 28a; 28b: Dichtfläche des Lagerrings
- 30a; 30b: Wälzkörper
- 32a; 32b: Mittelachse in Ruheposition
- 33a; 33b: Lauffläche des Außenrings
- 112: Großlager
- 114: Labyrinthring
- 116: V-Ring
- 120: Lagerring
- 130: Wälzkörper
- 140: Labyrinth

## Patentansprüche

1. Eine Dichtungseinheit (10a; 10b) für ein Wälzlager (12a; 12b), wobei die Dichtungseinheit (10a; 10b) ein zumindest teilringförmiges Element (14a; 14b) mit einer Dichtlippe (16a; 16b) umfasst, wobei das zumindest teilringförmige Element (14a; 14b) ein Befestigungsmittel (18a; 18b) zur Befestigung an einem inneren Lagerring (21a; 21b) des Wälzlagers (12a; 12b) aufweist, und wobei das Lager einen in einem begrenzten Winkel zu dem inneren Lagerring (21a, 21b) verkippbaren äußeren Lagerring (20a; 20b) umfasst.

2. Dichtungseinheit (10a; 10b) gemäß Anspruch 1, wobei das Element (14a; 14b) ein zumindest teilscheibenförmiges Element (14a; 14b) ist und/oder das Element (14a; 14b) einen Durchmesser von mindestens 400 Millimetern aufweist.

3. Dichtungseinheit (10a; 10b) gemäß einem der vorangegangenen Ansprüche, wobei eine Dichtfläche (22a; 22b) der Dichtlippe (16a; 16b) das Element (14) in axialer Richtung überragt.

4. Dichtungseinheit (10a; 10b) gemäß einem der vorangegangenen Ansprüche, wobei das Element (14b) eine Nut (24b) zur Befestigung eines Versteifungselements (26b) aufweist und/oder wobei die Dichtungseinheit (10a; 10b) einstückig ausgebildet ist.

5. Dichtungseinheit (10b) gemäß Anspruch 4, wobei die Nut (24b) näher an der Dichtlippe (16b) als an dem Befestigungsmittel (18b) liegt und/oder wobei die Nut (24b) ein Versteifungselement (26b) umfasst.

6. Dichtungseinheit (10a; 10b) gemäß einem der vorangegangenen Ansprüche, wobei das Befestigungsmittel (18a; 18b) relativ zu der Dichtlippe (16a; 16b) radial innen oder außen liegt.

7. Dichtungseinheit (10a; 10b) gemäß einem der vorangegangenen Ansprüche, wobei die Dichtungseinheit (10a; 10b) mit dem Lagerring (20a; 20b; 21a; 21b) austauschbar verbindbar ist.

8. Ein Wälzlager (12a; 12b) mit einer Dichtungseinheit (10a; 10b) gemäß einem der vorangegangenen Ansprüche, wobei das Element (14a; 14b) mit zumindest einem Lagerring (20a; 20b; 21a; 21b) des Lagers in axialer Richtung bündig abschließt.

9. Wälzlager (12b) gemäß Anspruch 8, wobei das Element (14b) eine Nut (24b) zur Befestigung eines Versteifungselements (26b) aufweist, und wobei ferner ein Versteifungselement (26b) in die Nut (24b) eingebracht ist, und das Versteifungselement (26b) einen Wärmeausdehnungskoeffizienten aufweist, der im Wesentlichen dem Wärmeausdehnungskoeffizienten eines Lagerrings (20b; 21b) entspricht.
